# EUROPEAN PATENT APPLICATION

(11) **EP 1 722 369 A1**
(43) Date of publication of application: **15.11.2006**
(21) Application number: 04771039.7
(22) Date of filing: 29.07.2004
(51) Int. Cl.: G11B 27/00

(54) **RECORDER, REPRODUCER, RECORDING METHOD, REPRODUCING METHOD AND RECORDING MEDIUM**

(30) Priority: 05.03.2004 JP 2004062913; 28.05.2004 JP 2004159400
(71) Applicant: Ricoh Company, Ltd., Tokyo 143-8555 (JP)
(72) Inventor: YAMADA, Yousuke, 2291123 (JP)
(74) Representative: Mounteney, Simon James
(86) International application number: PCT/JP2004/010826
(87) International publication number: WO 2005/086165

(57) **Abstract**

The CPU 38 of the personal computer 3 controls other components to input content data; to compress the content data; to extract index data from the content data based on data type information obtained during the compression of the content data; and to record the compressed content data, the index data, and recording time information obtained during the compression of the content data on the optical disk 1 mounted on the DVD drive 2, thereby making it simpler to generate index data.

## Description

### Technical Field

The present invention relates to a recording apparatus, such as an optical disk recording apparatus, which records data, for example, time series content data such as video data, still image data, or large text data (a log file, for example), on a recording medium, for example, an optical disk such as a CD-ROM disk, CD-R disk, CD-RW disk, DVD-ROM disk, DVD-R disk, DVD-RW disk, DVD-RAM disk, DVD+RW disk, or DVD+R disk, a magnetooptical disk such as an MO disk or MD, a magnetic disk such as a hard disk (HD) or flexible disk (FD), or a memory card such as a non-volatile RAM or flash ROM; a reproducing apparatus, such as an optical disk reproducing apparatus, which reproduces data recorded by a recording apparatus as mentioned above on a recording medium as mentioned above; a method of recording data on a recording medium using a recording apparatus as mentioned above; a method of reproducing data recorded on a recording medium using a reproducing apparatus as mentioned above; and a recording medium having a computer program stored therein.

### Background Art

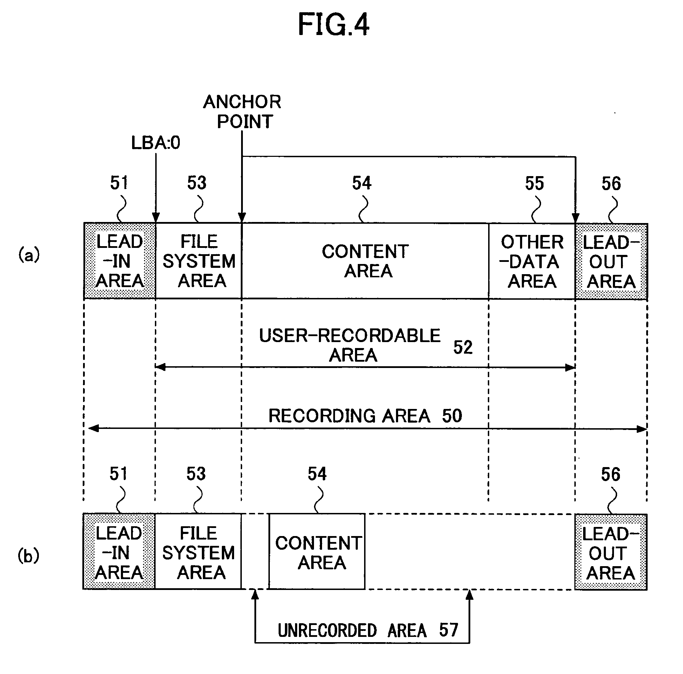

FIG. 4 is a drawing illustrating an exemplary data layout in a recording medium using a linear addressing scheme.

Normally, a recording medium (optical disk), such as a CD-ROM disk, CD-R disk, CD-RW disk, DVD-ROM disk, DVD-R disk, DVD-RW disk, DVD-RAM disk, DVD+RW disk, or DVD+R disk, is divided into recording/reproducing sectors of a constant size. In FIG. 4, a recording medium is divided into larger units, i.e. application level areas.

As shown in FIG. 4 (a), the first sub-area in a recording area 50 of the recording medium is called a lead-in area 51 and stores information relating to the entire recording medium such as information on the recording medium itself and layout information of subsequent recording units. When the recording medium is mounted on a recording/reproducing apparatus, the data in the lead-in area 51 is read out first.

An area following the lead-in area 51 is called a user-recordable area 52 where a user such as a host computer can actually record data. A user can record data only in this area.

The first sector of the user-recordable area 52 starts at address 0 and indicated as LBA: 0.

Certain addresses in the user-recordable area 52 are assigned as anchor points which addresses differ depending on the file system of, for example, each operating system (OS). An anchor point is a sector indicating that user data are read out starting from that address. The user-recordable area 52 may have two or more anchor points.

A file system area 53 in the user-recordable area 52 defines the locations, sizes, time, attributes, and the like of files and directories.

The file system area 53 is followed by a content area 54 which stores content data such as application data. The content area 54 may be followed by an other-data area 55 that stores data other than content data. The other-data area 55 is dispensable.

The last sub-area is called a lead-out area 56 which is a recorded area and extends as far as the end limit of the recording medium. The lead-out area 56 prevents an optical pickup of a recording/reproducing apparatus, which optical pickup reads/writes data from/onto a recording medium by irradiating the recording medium with a light, from overrunning the recording area 50.

The layout shown in FIG. 4 (a) does not represent actual recording sizes. In actual cases, normally, content data occupies most of the recording area. Normally, areas with different functions as described above are laid out continuously. If there are unrecorded areas 57 in the user-recordable area 52 as shown in FIG. 4 (b), data on the recording medium cannot be reproduced by a reproduction-only apparatus and the compatibility of the recording medium deteriorates. Under the limitation as described above, technologies for recording different types of data on the same recording medium are being developed.

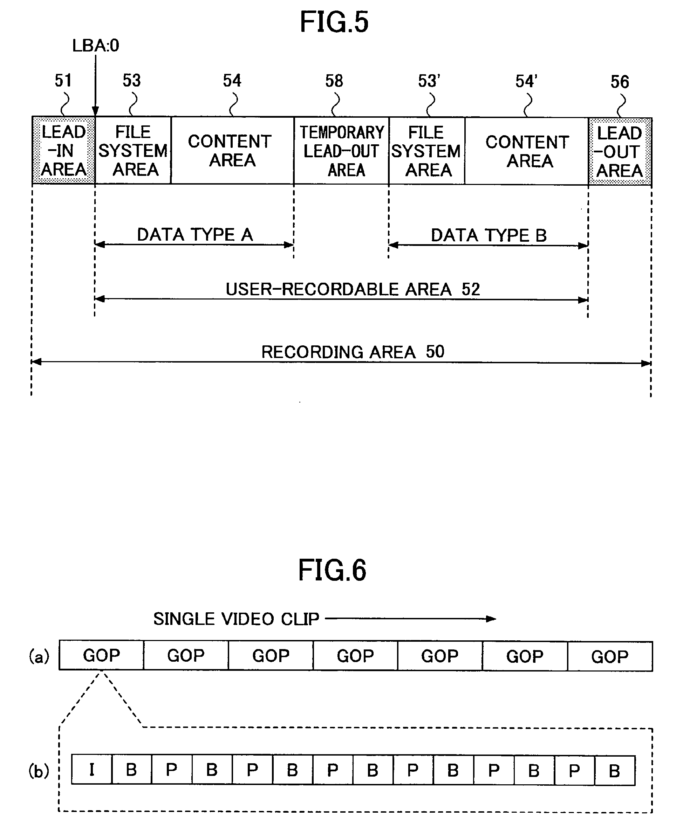

FIG. 5 is a drawing illustrating an exemplary data layout in a recording medium on which different types of data can be recorded.

In the exemplary data layout, the user-recordable area 52 in the recording area 50 is divided into multiple sub-areas. In this case, the size of content area allocated for each piece of data becomes smaller. More specifically, as shown in FIG. 5, the user-recordable area 52 is divided into a data type A area including a file system area 53 and a content area 54; and a data type B area including a file system area 53' and a content area 54'. In this layout, since the lead-out area 56 does not have a single data type, a temporary lead-out area 58 is provided between the data type A area and the data type B area. Such a layout enables recording different types of data on the same recording medium.

However, index data alone merely makes it possible to find the head of a data file. To access a certain portion of a data file, in other words, to reproduce recorded data such as a video from a certain target point, the video should be fast-forwarded to a point near the target point, and then forwarded at a normal reproduction speed to the target point. In such a method, it is necessary to repeat fast-forwarding and reproduction of data to find a target point. Also, even rewinding is necessary when the data are fast-forwarded past the target point. Therefore, finding a target point is very troublesome.

To avoid such frustrating operations, a method of finding a target point has been developed. In the method, data recorded on a recording medium are marked at multiple points while the data are being reproduced, so that the data can be forwarded quickly to the marked points at a later time (see, for example, Japanese Patent Application Publication No. 2003-018527, Japanese Patent Application Publication No. 2003-111004, Japanese Patent Application Publication No. 2003-134415, and Japanese Patent Application Publication No. 9-305365).

### Disclosure of Invention

### Problems to be Solved by the Invention

However, a conventional recording/reproducing apparatus requires a user to reproduce and mark data after recording the data on a recording medium. Such a marking process involves complicated operations including repeating reproducing/recording operations and is therefore troublesome for a user.

An object of the present invention is to obviate one or more problems caused by the limitations and disadvantages of the related art. Another object of the present invention is to make it possible to automatically generate index data including portions of content data such as a video while recording the content data; and to record the index data together with the content data on a recording medium.

### Means for Solving the Problems

To achieve the above mentioned objects, the present invention provides recording apparatuses and a reproducing apparatus described in (1) thorough (6) below.
(1) A recording apparatus including a recording control unit configured to input content data; to compress the content data; to extract a portion of the content data, which portion of the content data is to be used as an index entry, based on data type information obtained during the compression of the content data; and to record on a recording medium the compressed content data, the portion of the content data, and recording time information obtained during the compression of the content data.
(2) The recording apparatus as described in (1), wherein the compressed content data, the portion of the content data, and the recording time information obtained during the compression of the content data are recorded in different areas of said recording medium.
(3) The recording apparatus as described in (1) or (2), wherein the portion of the content data is appended to another portion of the content data, which other portion of the content data is recorded on said recording medium, as the compression of the content data progresses.
(4) The recording apparatus as described in (1), (2), or (3), wherein the portion of the content data is recorded on a different recording medium than said recording medium.
(5) The recording apparatus as described in (4), wherein the portion of the content data is recorded on a different recording medium than said recording medium during intervals between recording sessions of the compressed content data.
(6) A reproducing apparatus including a reproducing unit configured to reproduce a portion of content data, which portion of the content data is recorded on a recording medium by the recording apparatus as described in (1), (2), or (3); and to reproduce the content data at fast speed, backward, or backward at fast speed based on the reproduced portion of the content data.

The present invention also provides recording methods and a reproducing method described in (7) through (12) below.
(7) A recording method including the steps of inputting content data; compressing the content data; extracting a portion of the content data, which portion of the content data is to be used as an index entry, based on data type information obtained during the compression of the content data; and recording on a recording medium the compressed content data, the portion of the content data, and recording time information obtained during the compression of the content data.
(8) The recording method as described in (7), wherein the compressed content data, the portion of the content data, and the recording time information obtained during the compression of the content data are recorded in different areas of said recording medium.
(9) The recording method as described in (7) or (8), wherein the portion of the content data is appended to another portion of the content data, which another portion of the content data is recorded on said recording medium, as the compression of the content data progresses.
(10) The recording method as described in (7), (8), or (9), wherein the portion of the content data is recorded on a different recording medium than said recording medium.
(11) The recording method as described in (10), wherein the portion of the content data is recorded on a different recording medium than said recording medium during intervals between recording sessions of the compressed content data.
(12) A reproducing method including the steps of reproducing a portion of content data, which portion of the content data is recorded on a recording medium by the recording method as described in (7), (8), (9), (10), or (11); and reproducing the content data at fast speed, backward, or backward at fast speed based on the reproduced portion of the content data.

The present invention further provides recording media described in (13) through (18) below.
(13) A computer-readable recording medium having a program stored therein for causing a computer to input content data; to compress the content data; to extract a portion of the content data, which portion of the content data is to be used as an index entry, based on data type information obtained during the compression of the content data; and to record on a recording medium the compressed content data, the portion of the content data, and recording time information obtained during the compression of the content data.
(14) The computer-readable recording medium having a program stored therein as described in (13), wherein the compressed content data, the portion of the content data, and the recording time information obtained during the compression of the content data are recorded in different areas of said recording medium.
(15) The computer-readable recording medium having a program stored therein as described in (13) or (14), wherein the portion of the content data is appended to another portion of the content data, which other portion of the content data is recorded on said recording medium, as the compression of the content data progresses.
(16) The computer-readable recording medium having a program stored therein as described in (13), (14), or (15), wherein the portion of the content data is recorded on a different recording medium than said recording medium.
(17) The computer-readable recording medium having a program stored therein as described in (16), wherein the portion of the content data is recorded on a different recording medium than said recording medium during intervals between recording sessions of the compressed content data.
(18) The computer-readable recording medium having a program stored therein as described in (13), (14), (15), (16), or (17), wherein the program further causes a computer to reproduce a portion of the content data, which portion of the content data is recorded on said recording medium; and to reproduce the content data at fast speed, backward, or backward at fast speed based on the reproduced portion of the content data.

The present invention further provides recording apparatuses described in (19) through (28) below.
(19) A recording apparatus including a data recording unit configured to intermittently record content data on a recording medium; an index-information-and-portion-of-data generating unit configured to generate index information from the content data and to extract a portion of the content data, which portion of the content data corresponds to the index information, while the data recording unit is recording the content data; and an index-information-and-portion-of-data recording unit configured to record on said recording medium, during intervals between recording sessions by the data recording unit of the content data, the index information and the portion of the content data generated/extracted by the index-information-and-portion-of-data generating unit.
(20) The recording apparatus as described in (19), wherein the data recording unit is configured to temporarily store the content data to be recorded on said recording medium in a buffer; to read out the content data from the buffer; and to intermittently record the read-out content data on said recording medium.
(21) The recording apparatus as described in (19) or (20), wherein the index-information-and-portion-of-data generating unit is configured to generate index information from the content data, to extract a portion of the content data, which portion of the content data corresponds to the index information, and to store the generated index information and the extracted portion of the content data in a buffer, while the data recording unit is recording the content data; and the index-information-and-portion-of-data recording unit is configured to read out the index information and the portion of the content data generated/extracted and stored in the buffer by the index-information-and-portion-of-data generating unit, and to record on said recording medium the read-out index information and the read-out portion of the content data, during intervals between recording sessions by the data recording unit of the content data.
(22) The recording apparatus as described in (19), (20), or (21), wherein the index information includes recording time information.
(23) The recording apparatus as described in (19), (20), (21), or (22), wherein the index information includes frame number information.
(24) The recording apparatus as described in (19), (20), (21), (22), or (23), wherein the index-information-and-portion-of-data generating unit generates the index information and extracts the portion of the content data while the content data are being compressed.
(25) The recording apparatus as described in (24), wherein the compressed content data, the portion of the content data, and the recording time information obtained during the compression of the content data are recorded in different areas of said recording medium.
(26) The recording apparatus as described in (24) or (25), wherein the portion of the content data is appended to another portion of the content data, which other portion of the content data is recorded on said recording medium, as the compression of the content data progresses.
(27) The recording apparatus as described in (24), (25), or (26), wherein the portion of the content data is recorded on a different recording medium than said recording medium.
(28) The recording apparatus as described in (27), wherein the portion of the content data is recorded on a different recording medium than said recording medium during intervals between recording sessions of the compressed content data.

The present invention further provides recording methods described in (29) through (38) below.
(29) A recording method including a data recording step of intermittently recording content data on a recording medium; an index-information-and-portion-of-data generating step of generating index information from the content data and extracting a portion of the content data, which portion of the content data corresponds to the index information, while the content data are being recorded in the data recording step; and an index-information-and-portion-of-data recording step of recording on said recording medium, during intervals between recording sessions of the content data in the data recording step, the index information and the portion of the content data generated/extracted in the index-information-and-portion-of-data generating step.
(30) The recording method as described in (29), wherein, in the data recording step, the content data to be recorded on said recording medium are temporarily stored in a buffer, read out from the buffer, and intermittently recorded on said recording medium.
(31) The recording method as described in (29) or (30), wherein, in the index-information-and-portion-of-data generating step, index information is generated from the content data, a portion of the content data which portion of the content data corresponds to the index information is extracted from the content data, and the generated index information and the extracted portion of the content data are stored in a buffer, while the content data are being recorded in the content data recording step; and, in the index-information-and-portion-of-data recording step, the index information and the portion of the content data generated/extracted and stored in the buffer in the index-information-and-portion-of-data generating step are read out and recorded on said recording medium during intervals between recording sessions of the content data in the data recording step.
(32) The recording method as described in (29), (30), or (31), wherein the index information includes recording time information.
(33) The recording method as described in (29), (30), (31), or (32), wherein the index information includes frame number information.
(34) The recording method as claimed in (29), (30), (31), (32), or (33), wherein, in the index-information-and-portion-of-data generating step, the index information and the portion of the content data are generated while the content data are being compressed.
(35) The recording method as described in (34), wherein the compressed content data, the portion of the content data, and the recording time information obtained during the compression of the content data are recorded in different areas of said recording medium.
(36) The recording method as described in (34) or (35), wherein the portion of the content data is appended to another portion of the content data, which other portion of the content data is recorded on said recording medium, as the compression of the content data progresses.
(37) The recording method as described in (34), (35), or (36), wherein the portion of the content data is recorded on a different recording medium than said recording medium.
(38) The recording method as described in (37), wherein the portion of the content data is recorded on a different recording medium than said recording medium during intervals between recording sessions of the compressed content data.

The present invention further provides recording media described in (39) through (48) below.
(39) A computer-readable recording medium having a program stored therein, said program including a data recording code unit configured to intermittently record content data on a recording medium; an index-information-and-portion-of-data generating code unit configured to generate index information from the content data and to extract a portion of the content data, which portion of the content data corresponds to the index information, while the data recording code unit is recording the content data; and an index-information-and-portion-of-data recording code unit configured to record on said recording medium, during intervals between recording sessions by the data recording code unit of the content data, the index information and the portion of the content data generated/extracted by the index-information-and-portion-of-data generating code unit.
(40) The computer-readable recording medium having a program stored therein as described in (39), wherein the data recording code unit is configured to temporarily store the content data to be recorded on said recording medium in a buffer; to read out the content data from the buffer; and to intermittently record the read-out content data on said recording medium.
(41) The computer-readable recording medium having a program stored therein as described in (39) or (40), wherein the index-information-and-portion-of-data generating code unit is configured to generate index information from the content data, to extract a portion of the content data, which portion of the content data corresponds to the index information, and to store the generated index information and the extracted portion of the content data in a buffer, while the data recording code unit is recording the content data; and the index-information-and-portion-of-data recording code unit is configured to read out the index information and the portion of the content data generated/extracted and stored in the buffer by the index-information-and-portion-of-data generating code unit, and to record on said recording medium the read-out index information and the read-out portion of the content data, during intervals between recording sessions by the data recording code unit of the content data.
(42) The computer-readable recording medium having a program stored therein as described in (39), (40), or (41), wherein the index information includes recording time information.
(43) The computer-readable recording medium having a program stored therein as described in (39), (40), (41), or (42), wherein the index information includes frame number information.
(44) The computer-readable recording medium having a program stored therein as described in (39), (40), (41), (42), or (43), wherein the index-information-and-portion-of-data generating code unit generates the index information and extracts the portion of the content data while the content data are being compressed.
(45) The computer-readable recording medium having a program stored therein as described in (44), wherein the compressed content data, the portion of the content data, and the recording time information obtained during the compression of the content data are recorded in different areas of said recording medium.
(46) The computer-readable recording medium having a program stored therein as described in (44) or (45), wherein the portion of the content data is appended to another portion of the content data, which other portion of the content data is recorded on said recording medium, as the compression of the content data progresses.
(47) The computer-readable recording medium having a program stored therein as described in (44), (45), or (46), wherein the portion of the content data is recorded on a different recording medium than said recording medium.
(48) The computer-readable recording medium having a program stored therein as described in (47), wherein the portion of the content data is recorded on a different recording medium than said recording medium during intervals between recording sessions of the compressed content data.

### Advantageous Effect of the Invention

A recording apparatus and a recording method according to the present invention make it possible to automatically generate index data including portions of content data such as a video while recording the content data and to record the index data together with the content data on a recording medium, thereby making it simpler to generate index data. Also, a reproducing apparatus and a reproducing method according to the present invention make it possible to reproduce, for various purposes, the index data recorded on a recording medium by the above described recording apparatus and recording method. Further, a recording medium having a program stored therein according to the present invention makes it possible to automatically generate index data including portions of content data such as a video while recording the content data and to record the index data together with the content data on a recording medium.

### Brief Description of the Drawings

FIG. 1 is a block diagram illustrating the internal configuration of a DVD drive and a personal computer shown in FIG. 2;
FIG. 2 is a block diagram illustrating the configuration of a system including an optical disk recording/reproducing apparatus according to an embodiment of the present invention;
FIG. 3 is a drawing illustrating a data recording process in the DVD drive and the personal computer shown in FIG. 1;
FIG. 4 is a drawing illustrating an exemplary data layout in a recording medium using a linear addressing scheme;
FIG. 5 is a drawing illustrating an exemplary data layout in a recording medium on which different types of data can be recorded; and
FIG. 6 is a drawing illustrating an MPEG format.

### Explanation of References

1: optical disk 2, 10: DVD drive 3: personal computer 4, 8: display apparatus 5, 9: input apparatus 6: DVD recorder 7: tuner 11: editing/recording apparatus 20: spindle motor 21: optical pickup 22: rack and pinion motor 23: rotation control unit 24: rack and pinion motor control unit 25: optical pickup control unit 26: signal processing unit 27: non-volatile memory 28: buffer memory 28a: cache memory 29: controller 30: A/D converter 31: D/A converter 32: ATA/ATAPI I/F 33: decoder 34: encoder 35: index control unit 36: ROM 37: RAM 37a: first buffer 37b: second buffer 37c: third buffer 38: CPU 39: RTC timer 40: external interface 41: memory card slot 42: memory card 43: memory card controller 50: recording area 51: lead-in area 52: user-recordable area 53, 53': file system area 54, 54': content area 55: other-data area 56: lead-out area 57: unrecorded area

### Best Mode for Carrying Out the Invention

The best mode for carrying out the invention is described based on the following embodiments with reference to the accompanying drawings.

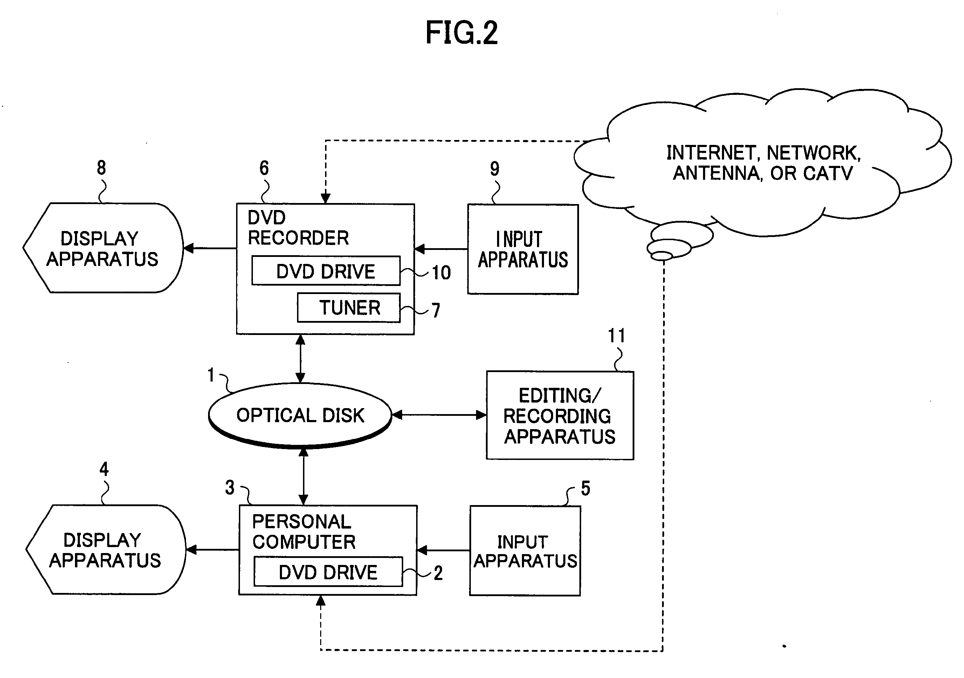

FIG. 2 is a block diagram illustrating the configuration of a system including an optical disk recording/reproducing apparatus according to an embodiment of the present invention.

The system includes a DVD recorder 6 with a built-in DVD drive 10 and a built-in tuner 7. The DVD recorder 6 is normally connected to a back-end host computer (not shown). The combination of the DVD recorder 6 and the host computer (not shown) functions substantially the same as an optical disk recording/reproducing apparatus which works both as a recording apparatus and a reproducing apparatus according to the present invention.

The DVD recorder 6 has a usability-oriented design; is provided with an input apparatus 9 such as a remote control unit; is capable of receiving, via a tuner 7 or a network interface, data such as video data, still image data, audio data, or text data from other sources such as an antenna, CATV, or the Internet; and is capable of recording the received data on an optical disk 1 used as a recording medium. A display apparatus 8 such as a CRT or an LCD may also be provided to make inputting easier.

The system also includes a personal computer (PC) 3 with a built-in DVD drive 2.

The personal computer (PC) 3 with the built-in DVD drive 2 functions substantially the same as an optical disk recording/reproducing apparatus which works both as a recording apparatus and a reproducing apparatus according to the present invention. Instructions to the PC 3 can be input by using an input apparatus 5 such as a keyboard and a mouse. A display apparatus 4 such as a CRT or an LCD is also provided. More complicated editing and search operations may be performed with this configuration. The remote control unit, keyboard, and mouse can also be used to input or select index data. The PC 3 is capable of receiving, via a tuner or a network interface, data such as video data or audio data from other sources such as an antenna, CATV, or the Internet; recording the received data on the optical disk 1; and editing the video or audio data and recording the edited data on the optical disk 1.

An editing/recording apparatus 11 in the middle of FIG. 2 is a dedicated apparatus used, for example, at a studio. Such a dedicated apparatus is normally designed for a professional and is capable of complicated authoring. Embodiments of the present invention provide optical disk recording/reproducing apparatuses which, in turn, provide recording apparatuses suitable for various situations and purposes.

An optical disk recording/reproducing apparatus, which works both as a recording apparatus and a reproducing apparatus according to the present invention, is described below. In this embodiment, the personal computer 3 with the built-in DVD drive 2 shown in FIG. 2 is described in detail. However, the combination of the DVD recorder 6 shown in FIG. 2, which DVD recorder 6 includes the built-in DVD drive 10 and the built-in tuner 7, and the host computer (not shown) provides substantially the same functions.

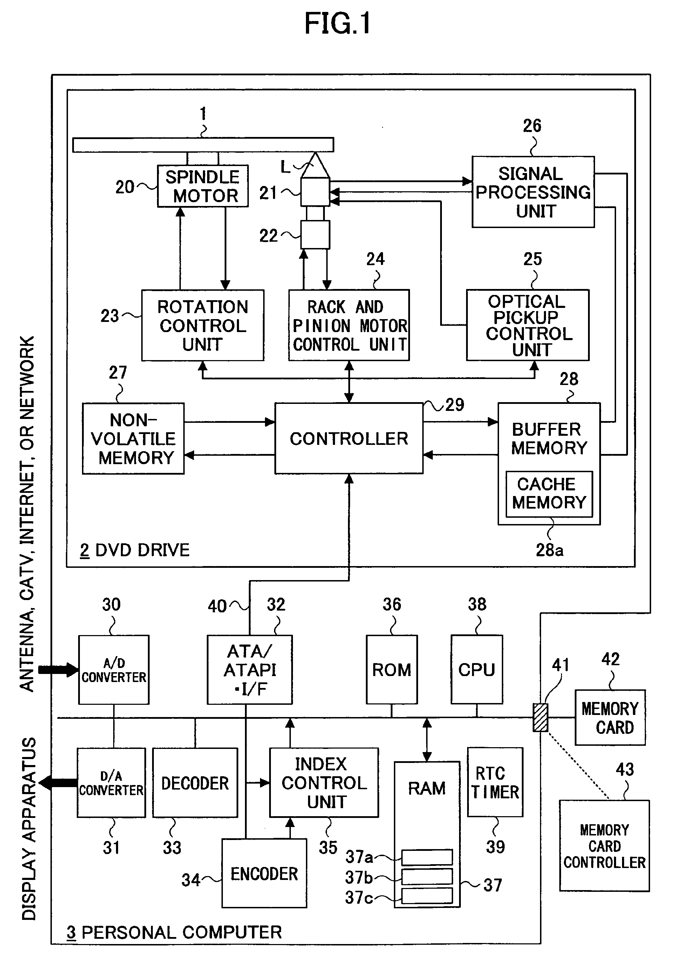

FIG. 1 is a block diagram illustrating the internal configuration of the DVD drive 2 and the personal computer 3 shown in FIG. 2.

The DVD drive 2 is an optical disk recording/reproducing apparatus, such as a CD drive or a DVD drive, for recording data on the recordable/reproducible optical disk (recording medium) 1, such as a CD-ROM disk, CD-R disk, CD-RW disk, DVD-ROM disk, DVD-R disk, DVD-RW disk, DVD-RAM disk, DVD+RW disk, or DVD+R disk. The DVD drive 2 functions both as a recording apparatus and a reproducing apparatus according to the present invention and includes a spindle motor 20 for rotating the optical disk 1, a rotation control unit 23 for controlling the rotation of the spindle motor 20, and an optical pickup 21 for irradiating the optical disk 1 with a laser beam L to record or reproduce data.

The DVD drive 2 also includes an optical pickup control unit 25 for controlling the emission of the laser beam L from the optical pickup 21, a rack and pinion motor 22 for moving the optical pickup 21 in the radius direction of the optical disk 1, a rack and pinion motor control unit 24 for controlling the rotation of the rack and pinion motor 22, a signal processing unit 26 for controlling the output of a reproduced signal from the optical pickup 21 and the input of a recording signal to the optical pickup 21, a non-volatile memory 27 such as a ROM, and a controller 29. The non-volatile memory 27 stores various programs (and various settings). The controller 29 is implemented with a microcomputer including a CPU, registers, and a RAM. The CPU of the controller 29 executes the stored programs and thereby controls the entire DVD drive 2.

Further, the DVD drive 2 includes a buffer memory 28 and an external interface 40. The buffer memory 28 is used to temporarily store data such as data to be recorded on the optical disk 1 and data reproduced from the optical disk 1, and is also used by the controller 29 to temporarily store data during various processes. The external interface 40 is used for data exchange between the personal computer 3 and the DVD drive 2.

The buffer memory 28 of the DVD drive 2 includes a cache memory 28a.

The personal computer 3 includes an analog/digital (A/D) converter 30 for analog-to-digital conversion of video signals from the outside (input from an antenna, CATV, the Internet, or a network), an encoder 34 and a decoder 33 for compression and expansion of the video signals (when a high-performance CPU is used, the compression and expansion may be performed by the CPU), and a digital/analog (D/A) converter 31 for digital-to-analog conversion of the video signals (output to the display apparatus). The digital/analog (D/A) converter 31 uses a PAL/NTSC video encoder for the digital-to-analog conversion.

The personal computer 3 may also include a real-time clock (RTC) timer 39 for measuring data recording time and actual time. Measured data recording time and actual time may be used when extracting a portion of content data which portion is to be used as an index entry, or may be used as an index entry itself. The personal computer 3 also includes an ATA/ATAPI interface (I/F) 32 for communication between the personal computer 3 and the DVD drive 2 or a hard disk drive (HDD) (not shown).

Further, the personal computer 3 includes a CPU 38, a ROM 36, and a RAM 37. The RAM 37 includes a first buffer 37a, a second buffer 37b, and a third buffer 37c, which are used as work memories or data buffers. The ROM 36 is a computer-readable recording medium that stores, for example, a program for controlling the entire personal computer 3, an operating system (OS), and the above mentioned programs according to the present invention. The above mentioned programs according to the present invention may be stored in a portable recording medium such as a floppy (registered trademark) disk or a CD-ROM.

The CPU 38 controls an index control unit 35 and other components by executing the programs to implement the above mentioned recording method and reproducing method according to the present invention, and thereby implements a recording control unit, data recording unit, index-information-and-portion-of-data generating unit, and index-information-and-portion-of-data recording unit.

A mask ROM may be used for the ROM 36. However, using a non-volatile flash ROM, the content of which can be rewritten at once, makes upgrading of the programs easier.

Also, the index control unit 35, under the control of the CPU 38, generates index data (index information) according to the present invention.

In this embodiment, the first buffer 37a through the third buffer 37c, which are implemented by software in the RAM 37, are used as buffers for data exchange between the personal computer 3 and the DVD drive 2. However, the first buffer 37a through the third buffer 37c may be implemented by hardware, instead of by software, outside of the RAM 37.

The first buffer 37a and the second buffer 37b are provided to continuously feed data such as video data to the DVD drive 2. When the first buffer 37a is full and transferring data to the DVD drive 2, the second buffer 37b receives and holds data that are transmitted continuously into the personal computer 3 from the outside. When the second buffer 37b becomes full, the first buffer 37a again receives the incoming data. Of course, all the data in the first buffer 37a must be transferred to the DVD drive 2 and the first buffer 37a must be emptied before accepting the incoming data.

In this way, data are buffered alternately in the first buffer 37a and the second buffer 37b so that data are fed to the DVD drive 2 without interruption.

The third buffer 37c is used to hold index data. Analog content data input from the outside are converted by the A/D converter 30 into digital data. While the encoder 34 is compressing the content data, the index control unit 35 extracts portions of the content data, which portions are to be used as index entries, by referring to data type flags (data type information) output from the encoder 34, and stores the portions of the content data in the third buffer 37c. The index control unit 35 also generates index information which constitutes index data together with the portions of the content data, and stores the index information in the third buffer 37c. Since only portions of content data such as video data are extracted for the index data, transmission timing is not a crucial factor. Therefore, one third buffer 37c is normally enough for the index data. In this way, the index control unit 35 controls the generation of index data.

The personal computer 3 may also include a memory card slot 41, a memory card 42 inserted into the memory card slot 41, and a memory card controller 43. The memory card 42 may be used for inputting data such as digital camera images or for recording index data. The memory card 42 is normally implemented with a detachable flash ROM and can be used for digital data exchange with various devices including a PC.

In the personal computer 3, under the control of the CPU 38, the A/D converter 30 inputs content data; the encoder 34 compresses the content data and temporarily stores the compressed content data in the first buffer 37a or the second buffer 37b in the RAM 37; and, while the encoder 34 is compressing the content data, the index control unit 35 extracts index data from the content data by referring to data type flags output from the encoder 34, and temporarily stores the index data in the third buffer 37c in the RAM 37. When extracting the index data (extracting portions of the content data), the index control unit 35 determines frame numbers and recording time (for example, the Greenwich Mean Time when recording is started and the time elapsed since the start of the recording) of the portions of the content data and stores the frame number information and the recording time information in the third buffer 37c.

The CPU 38 transfers the content data stored in the first buffer 37a and the second buffer 37b to the DVD drive 2. The DVD drive 2 intermittently records the content data on the optical disk 1. When the index data stored in the third buffer 37c reach a certain amount, the CPU 38 transfers the index data and the recording time information to the DVD drive 2 during intervals between data recording sessions. The DVD drive 2 records the index data and the recording time information in a predetermined area of the optical disk 1 during intervals between recording sessions of the compressed content data.

The CPU 38 may instead cause the DVD drive 2 to record the index data and recording time information and the compressed content data in different areas of the optical disk 1.

The CPU 38 may also cause the DVD drive 2 to append new index data, which include the portions of the content data and the recording time information (the index data may also include the frame number information), to the current index data recorded on the optical disk 1 as the compression of the content data progresses.

The CPU 38 may instead cause the DVD drive 2 to record the index data on a recording medium other than the optical disk 1.

The CPU 38 may cause the DVD drive 2 to record the index data on a recording medium other than the optical disk 1 during intervals between recording sessions of the compressed content data.

The CPU 38 may also causes the DVD drive 2 to reproduce and obtain the index data recorded on the optical disk 1, and to reproduce the recorded content data at fast speed, backward, or backward at fast speed based on the reproduced index data.

Since the DVD drive 2 records data on the optical disk 1 via the optical pickup 21, time to move the optical pickup 21 to a recording position is required when recording data. Therefore, data recording time of an optical disk recording/reproducing apparatus is normally set shorter than data compression time to make time to move the optical pickup 21.

For such an optical disk recording/reproducing apparatus, it is easy to find out when to record other data such as the index data in a different area of the optical disk 1 (or on a different recording medium) during intervals between recording sessions of the content data.

With a recording method as described above, when the recording of the compressed content data is completed, the recording of the index data on the optical disk is also completed.

The index data make it possible to reproduce the recorded content data freely, for example, at fast speed, backward, or backward at fast speed. The index data also eliminate the need for marking the recorded content data for reproduction at fast speed or other purposes.

The DVD drive 2 can extract portions of content data such as video data, still image data, or text data and record the extracted portions and the content data on a recording medium at the same time.

The DVD drive 2, while compressing content data such as video data for recording, can extract portions of the content data and generate index information (recording time information or frame number information) at the same time.

The DVD drive 2, while recording the content data on a recording medium, can record the generated index data on the same recording medium. The DVD drive 2 can reproduce the content data at fast speed, backward, and so on by reproducing the index data.

The DVD drive 2 can record the content data and the index data in different areas of a recording medium.

The DVD drive 2 can append new index data to the current index data as the compression of the content data progresses.

The DVD drive 2 can instead record the index data on a different recording medium than that on which the content data are recorded.

The DVD drive 2 can record the index data on a recording medium while recording the content data on another recording medium.

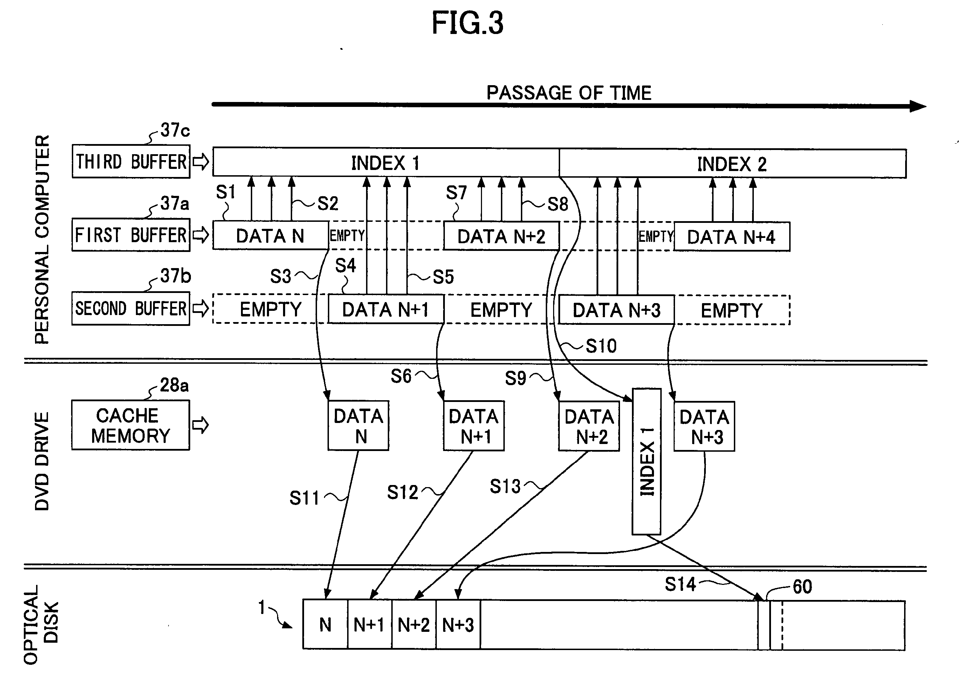

FIG. 3 is a drawing illustrating a data recording process in the DVD drive 2 and the personal computer 3 shown in FIG. 1.

The upper section "PERSONAL COMPUTER" in FIG. 3 illustrates the process of storing index data (INDEX 1, INDEX 2, ...) including portions of content data, time information, and frame information into the third buffer 37c; and the process of storing compressed content data (N ...) into the first buffer 37a and the second buffer 37b.

The middle section "DVD DRIVE" in FIG. 3 illustrates the process of storing data into the cache memory 28a in the buffer memory 28 shown in FIG. 1.

The lower section "OPTICAL DISK" in FIG. 3 illustrates the process in which the DVD drive 2 shown in FIG. 1 records index data and compressed content data on the optical disk 1.

In FIG. 3, time passes from left to right.

Under the control of the CPU 38, content data are input via the A/D converter 30 to the encoder 34 and are compressed by the encoder 34. In step S1 (steps are indicated by "S" in FIG. 3), compressed content data N is stored into the first buffer 37a. A certain amount of content data are compressed at a time and transferred unit by unit to the buffers. The compressed content data N is the Nth unit. At this step, the second buffer 37b is empty. While the compressed content data N is being stored into the first buffer 37a, index data, which include index information and portions of the content data, which portions are to be used as index entries, are generated. In step S2, the index data are sequentially stored into the third buffer 37c.

When the first buffer 37a becomes full of the compressed content data N, the compressed content data N is transferred, in step S3, to the cache memory 28a of an optical disk recording/reproducing apparatus. While the compressed content data N is being transferred, content data N+1 input from the A/D converter is stored, in step S4, into the second buffer 37b, so that the content data N+1 follows the content data N without interruption. While the content data N+1 is being stored into the second buffer 37b, index data of the content data N+1 are generated. In step S5, the index data are sequentially stored into the third buffer 37c.

When the second buffer 37b becomes full of the compressed content data N+1, the compressed content data N+1 is transferred, in step S6, to the cache memory 28a of the optical disk recording/reproducing apparatus. While the compressed content data N+1 is being transferred, content data N+2 input from the A/D converter is stored, in step S7, into the first buffer 37a, so that the content data N+2 follows the content data N+1 without interruption. While the content data N+2 is being stored into the first buffer 37a, index data of the content data N+2 are generated. In step S8, the index data are sequentially stored into the third buffer 37c. When the first buffer 37a becomes full of the compressed content data N+2, the compressed content data N+2 is transferred, in step S9, to the cache memory 28a of the optical disk recording/reproducing apparatus.

When the third buffer 37c becomes full of index data 1, the index data 1 is transferred, in step S10, to the cache memory 28a during intervals between data transmissions from the first buffer 37a and the second buffer 37b to the cache memory 28a.

In this way, the content data stored in the first buffer 37a and the second buffer 37b are transferred sequentially to the cache memory 28a. Then, in steps S11 through S13, the content data are recorded in a recording area of the optical disk 1 by the DVD drive 2. The index data stored in the cache memory 28a are recorded, in step S14, in an area 60 of the optical disk 1 which area 60 is different from the area where the content data (N, N+1, N+2, ...) are recorded.

To perform the data recording process as described above, the data recording rate of the DVD drive 2 must be faster than the data input rate.

A process of extracting portions of content data is described below.

As an example, a process of extracting portions of an MPEG video is described below. MPEG is a standard for compressing digital video.

FIG. 6 is a drawing illustrating an MPEG format.

As shown in FIG. 6 (a), MPEG employs an editing unit called group of pictures (GOP). As shown in FIG. 6 (b), a GOP (indicated by GOP in FIG. 6) is composed of I pictures, B pictures, and P pictures (or video objects) (in FIG. 6, indicated by I, B, and P, respectively). A GOP includes one or more I pictures, and P pictures and B pictures that follow the I pictures. In MPEG, a GOP is the smallest unit of editing and therefore cannot be divided. The maximum number of frames (pictures) in a GOP of an NTSC DVD video is 18.

I, B, and P pictures are types of pictures defined in the MPEG standard.

An I picture is a video frame generated by encoding video signals without using motion prediction. An I picture contains one screenful of image data in itself. Therefore, as the number of I pictures in streaming data increases, compression efficiency decreases. It is comparatively easy to extract I pictures as portions of content data.

A B picture is a video frame encoded using motion prediction on both the previous and next pictures. The number of bits of a B picture is normally less than that of a P picture.

A P picture is a video frame encoded using motion prediction on the previous picture only. A P picture contains motion vectors with reference to the previous I or P picture and the difference between a prediction picture created based on the motion vectors and the original picture. Generally, as the distance between a P picture and a reference I picture becomes longer, the quality of the P picture becomes lower.

As described above, according to embodiments of the present invention, index data including portions of content data are recorded while the content data such as video data are being recorded. Therefore, embodiments of the present invention eliminate the need to reproduce the recorded content data again to create index data. Also, the time for creating the index data and recording the index data on a recording medium can be reduced.

According to embodiments of the present invention, operations such as fast reproduction, backward reproduction, and backward fast reproduction, which are generally called trick plays, can be performed by reproducing only the recorded index data without reproducing the original content data.

Embodiments of the present invention make it possible to record index data while creating the index data. In other words, there is no need to wait until the creation of the index data is completed before starting its recording. Therefore, large memory is not required to temporarily store the index data. This makes it possible to simplify the system configuration and thereby reduce the product price.

According to embodiments of the present invention, index data can be recorded on a different recording media than that on which the content data are recorded. Therefore, the index data can be reproduced separately from the content data to get a rough outline of the content data. Embodiments of the present invention make it possible, for example, to record index data while the content data are being recorded. Such a recording apparatus or a method has a wide range of applications.

### Industrial Applicability

A recording apparatus, reproducing apparatus, recording method, and program according to the present invention are also applicable to a video recorder, video camcorder, digital editing apparatus, non-linear editing apparatus, digital camera, game console, DVD player, and personal computer including a desktop personal computer and a notebook personal computer.

## Claims

1. A recording apparatus, comprising:
a recording control unit configured to input content data; to compress the content data; to extract a portion of the content data, which portion of the content data is to be used as an index entry, based on data type information obtained during the compression of the content data; and to record on a recording medium the compressed content data, the portion of the content data, and recording time information obtained during the compression of the content data.

2. The recording apparatus as claimed in claim 1, wherein the compressed content data, the portion of the content data, and the recording time information obtained during the compression of the content data are recorded in different areas of said recording medium.

3. The recording apparatus as claimed in claim 1 or 2, wherein the portion of the content data is appended to another said portion of the content data, which another said portion of the content data is recorded on said recording medium, as the compression of the content data progresses.

4. The recording apparatus as claimed in claim 1, 2, or 3, wherein the portion of the content data is recorded on a different recording medium than said recording medium.

5. The recording apparatus as claimed in claim 4, wherein the portion of the content data is recorded on a different recording medium than said recording medium during intervals between recording sessions of the compressed content data.

6. A reproducing apparatus, comprising:
a reproducing unit configured to reproduce a portion of content data, which portion of the content data is recorded on a recording medium by the recording apparatus as claimed in claim 1, 2, 3, 4, or 5; and to reproduce the content data at fast speed, backward, or backward at fast speed based on the reproduced portion of the content data.

7. A recording method, comprising the steps of:
inputting content data;
compressing the content data;
extracting a portion of the content data, which portion of the content data is to be used as an index entry, based on data type information obtained during the compression of the content data; and
recording on a recording medium the compressed content data, the portion of the content data, and recording time information obtained during the compression of the content data.

8. The recording method as claimed in claim 7, wherein the compressed content data, the portion of the content data, and the recording time information obtained during the compression of the content data are recorded in different areas of said recording medium.

9. The recording method as claimed in claim 7 or 8, wherein the portion of the content data is appended to another said portion of the content data, which another said portion of the content data is recorded on said recording medium, as the compression of the content data progresses.

10. The recording method as claimed in claim 7, 8, or 9, wherein the portion of the content data is recorded on a different recording medium than said recording medium.

11. The recording method as claimed in claim 10, wherein the portion of the content data is recorded on a different recording medium than said recording medium during intervals between recording sessions of the compressed content data.

12. A reproducing method, comprising the steps of:
reproducing a portion of content data, which portion of the content data is recorded on a recording medium by the recording method as claimed in claim 7, 8, 9, 10, or 11; and
reproducing the content data at fast speed, backward, or backward at fast speed based on the reproduced portion of the content data.

13. A computer-readable recording medium having a program embodied therein for causing a computer to input content data; to compress the content data; to extract a portion of the content data, which portion of the content data is to be used as an index entry, based on data type information obtained during the compression of the content data; and to record on a recording medium the compressed content data, the portion of the content data, and recording time information obtained during the compression of the content data.

14. The computer-readable recording medium having a program embodied therein as claimed in claim 13, wherein the compressed content data, the portion of the content data, and the recording time information obtained during the compression of the content data are recorded in different areas of said recording medium.

15. The computer-readable recording medium having a program embodied therein as claimed in claim 13 or 14, wherein the portion of the content data is appended to another said portion of the content data, which another said portion of the content data is recorded on said recording medium, as the compression of the content data progresses.

16. The computer-readable recording medium having a program embodied therein as claimed in claim 13, 14, or 15, wherein the portion of the content data is recorded on a different recording medium than said recording medium.

17. The computer-readable recording medium having a program embodied therein as claimed in claim 16, wherein the portion of the content data is recorded on a different recording medium than said recording medium during intervals between recording sessions of the compressed content data.

18. The computer-readable recording medium having a program embodied therein as claimed in claim 13, 14, 15, 16, or 17, wherein the program further causes a computer to reproduce a portion of the content data, which portion of the content data is recorded on said recording medium; and to reproduce the content data at fast speed, backward, or backward at fast speed based on the reproduced portion of the content data.

19. A recording apparatus, comprising:
a data recording unit configured to intermittently record content data on a recording medium;
an index-information-and-portion-of-data generating unit configured to generate index information from the content data and to extract a portion of the content data, which portion of the content data corresponds to the index information, while the data recording unit is recording the content data; and
an index-information-and-portion-of-data recording unit configured to record on said recording medium, during intervals between recording sessions by the data recording unit of the content data, the index information and the portion of the content data generated/extracted by the index-information-and-portion-of-data generating unit.

20. The recording apparatus as claimed in claim 19, wherein the data recording unit is configured to temporarily store the content data to be recorded on said recording medium in a buffer; to read out the content data from the buffer; and to intermittently record the read-out content data on said recording medium.

21. The recording apparatus as claimed in claim 19 or 20, wherein
the index-information-and-portion-of-data generating unit is configured to generate index information from the content data, to extract a portion of the content data, which portion of the content data corresponds to the index information, and to store the generated index information and the extracted portion of the content data in a buffer, while the data recording unit is recording the content data; and
the index-information-and-portion-of-data recording unit is configured to read out the index information and the portion of the content data generated/extracted and stored in the buffer by the index-information-and-portion-of-data generating unit, and to record on said recording medium the read-out index information and the read-out portion of the content data, during intervals between recording sessions by the data recording unit of the content data.

22. The recording apparatus as claimed in claim 19, 20, or 21, wherein the index information includes recording time information.

23. The recording apparatus as claimed in claim 19, 20, 21, or 22, wherein the index information includes frame number information.

24. The recording apparatus as claimed in claim 19, 20, 21, 22, or 23, wherein the index-information-and-portion-of-data generating unit generates the index information and extracts the portion of the content data while the content data is being compressed.

25. The recording apparatus as claimed in claim 24, wherein the compressed content data, the portion of the content data, and the recording time information obtained during the compression of the content data are recorded in different areas of said recording medium.

26. The recording apparatus as claimed in claim 24 or 25, wherein the portion of the content data is appended to another said portion of the content data, which another said portion of the content data is recorded on said recording medium, as the compression of the content data progresses.

27. The recording apparatus as claimed in claim 24, 25, or 26, wherein the portion of the content data is recorded on a different recording medium than said recording medium.

28. The recording apparatus as claimed in claim 27, wherein the portion of the content data is recorded on a different recording medium than said recording medium during intervals between recording sessions of the compressed content data.

29. A recording method, comprising:
a data recording step of intermittently recording content data on a recording medium;
an index-information-and-portion-of-data generating step of generating index information from the content data and extracting a portion of the content data, which portion of the content data corresponds to the index information, while the content data are being recorded in the data recording step; and
an index-information-and-portion-of-data recording step of recording on said recording medium, during intervals between recording sessions of the content data in the data recording step, the index information and the portion of the content data generated/extracted in the index-information-and-portion-of-data generating step.

30. The recording method as claimed in claim 29, wherein, in the data recording step, the content data to be recorded on said recording medium are temporarily stored in a buffer, read out from the buffer, and intermittently recorded on said recording medium.

31. The recording method as claimed in claim 29 or 30, wherein
in the index-information-and-portion-of-data generating step, index information is generated from the content data, a portion of the content data which portion of the content data corresponds to the index information is extracted from the content data, and the generated index information and the extracted portion of the content data are stored in a buffer, while the content data are being recorded in the content data recording step; and
in the index-information-and-portion-of-data recording step, the index information and the portion of the content data generated/extracted and stored in the buffer in the index-information-and-portion-of-data generating step are read out and recorded on said recording medium during intervals between recording sessions of the content data in the data recording step.

32. The recording method as claimed in claim 29, 30, or 31, wherein the index information includes recording time information.

33. The recording apparatus as claimed in claim 29, 30, 31, or 32, wherein the index information includes frame number information.

34. The recording method as claimed in claim 29, 30, 31, 32, or 33, wherein, in the index-information-and-portion-of-data generating step, the index information and the portion of the content data are generated while the content data are being compressed.

35. The recording method as claimed in claim 34, wherein the compressed content data, the portion of the content data, and the recording time information obtained during the compression of the content data are recorded in different areas of said recording medium.

36. The recording method as claimed in claim 34 or 35, wherein the portion of the content data is appended to another said portion of the content data, which another said portion of the content data is recorded on said recording medium, as the compression of the content data progresses.

37. The recording method as claimed in claim 34, 35, or 36, wherein the portion of the content data is recorded on a different recording medium than said recording medium.

38. The recording method as claimed in claim 37, wherein the portion of the content data is recorded on a different recording medium than said recording medium during intervals between recording sessions of the compressed content data.

39. A computer-readable recording medium having a program embodied therein, said program comprising:
a data recording code unit configured to intermittently record content data on a recording medium;
an index-information-and-portion-of-data generating code unit configured to generate index information from the content data and to extract a portion of the content data, which portion of the content data corresponds to the index information, while the data recording code unit is recording the content data; and
an index-information-and-portion-of-data recording code unit configured to record on said recording medium, during intervals between recording sessions by the data recording code unit of the content data, the index information and the portion of the content data generated/extracted by the index-information-and-portion-of-data generating code unit.

40. The computer-readable recording medium having a program embodied therein as claimed in claim 39, wherein the data recording code unit is configured to temporarily store the content data to be recorded on said recording medium in a buffer; to read out the content data from the buffer; and to intermittently record the read-out content data on said recording medium.

41. The computer-readable recording medium having a program embodied therein as claimed in claim 39 or 40, wherein
the index-information-and-portion-of-data generating code unit is configured to generate index information from the content data, to extract a portion of the content data, which portion of the content data corresponds to the index information, and to store the generated index information and the extracted portion of the content data in a buffer, while the data recording code unit is recording the content data; and
the index-information-and-portion-of-data recording code unit is configured to read out the index information and the portion of the content data generated/extracted and stored in the buffer by the index-information-and-portion-of-data generating code unit, and to record on said recording medium the read-out index information and the read-out portion of the content data, during intervals between recording sessions by the data recording code unit of the content data.

42. The computer-readable recording medium having a program embodied therein as claimed in claim 39, 40, or 41, wherein the index information includes recording time information.

43. The computer-readable recording medium having a program embodied therein as claimed in claim 39, 40, 41, or 42, wherein the index information includes frame number information.

44. The computer-readable recording medium having a program embodied therein as claimed in claim 39, 40, 41, 42, or 43, wherein the index-information-and-portion-of-data generating code unit generates the index information and extracts the portion of the content data while the content data are being compressed.

45. The computer-readable recording medium having a program embodied therein as claimed in claim 44, wherein the compressed content data, the portion of the content data, and the recording time information obtained during the compression of the content data are recorded in different areas of said recording medium.

46. The computer-readable recording medium having a program embodied therein as claimed in claim 44 or 45, wherein the portion of the content data is appended to another said portion of the content data, which another said portion of the content data is recorded on said recording medium, as the compression of the content data progresses.

47. The computer-readable recording medium having a program embodied therein as claimed in claim 44, 45, or 46, wherein the portion of the content data is recorded on a different recording medium than said recording medium.

48. The computer-readable recording medium having a program embodied therein as claimed in claim 47, wherein the portion of the content data is recorded on a different recording medium than said recording medium during intervals between recording sessions of the compressed content data.
